# EUROPEAN PATENT APPLICATION

(11) **EP 4 721 563 A1**
(43) Date of publication of application: **08.04.2026**
(21) Application number: 24811189.0
(22) Date of filing: 23.05.2024
(51) Int. Cl.: A01N 31/06, A01G 7/06, A01N 63/38, A01P 21/00

(54) **ENVIRONMENTAL STRESS RESISTANCE IMPROVING AGENT**

(30) Priority: 24.05.2023 JP 2023085037
(71) Applicant: OAT Agrio Co., Ltd., Tokyo 101-0052 (JP)
(72) Inventor: FUKUNAGA Satoshi, Aza-Shimokubo, Oasa-cho himeda, Naruto-shi, Tokushima 779-0301 (JP); SAKUMA Ken, Tokyo 101-0052 (JP); YAMAMOTO Mari, Aza-Shimokubo, Oasa-cho himeda, Naruto-shi, Tokushima 779-0301 (JP); KAKEI Taishin, Aza-Shimokubo, Oasa-cho himeda, Naruto-shi, Tokushima 779-0301 (JP); FUJI Masako, Aza-Shimokubo, Oasa-cho himeda, Naruto-shi, Tokushima 779-0301 (JP); EBE Shohei, Aza-Shimokubo, Oasa-cho himeda, Naruto-shi, Tokushima 779-0301 (JP)
(74) Representative: Hasegawa, Kan
(86) International application number: PCT/JP2024/019093
(87) International publication number: WO 2024/242184

(57) **Abstract**

It is an object of the present invention to provide an agent for improving environmental stress tolerance capable of improving the environmental stress tolerance of a plant, without inhibiting the growth of the plant in normal times. The present invention relates to an agent for improving environmental stress tolerance, comprising capsanthin and/or a fatty acid ester thereof, and intended for a plant.

## Description

### Technical Field

The present invention relates to an agent for improving environmental stress tolerance.

### Background Art

Plants may encounter various environmental stresses, such as high temperature, low temperature, dryness, excessive humidity, low sunlight, and salts, in their growth process. Unlike animals, plants are unable to move quickly and escape the stresses, and therefore have developed mechanisms to adapt to these environmental stresses.

However, in recent years, the frequent occurrence of abnormal weather due to environmental damage and the like has increased the opportunities for plants to be exposed to stresses, raising the issue of reduced yield and quality. Moreover, to increase food production in response to a growth in the world population, there is an urgent need to establish a technique for cultivating plants in regions where plants are exposed to severe stress, such as salt accumulation regions and dry regions.

Therefore, there is a need for a technique for improving the environmental stress tolerance of plants. Examples of such means include (1) cross-breeding; (2) recombination of an environmental stress-tolerant gene (for example, Patent Literature 1); and (3) methods of treatment with compounds (for example, Patent Literatures 2 and 3).

However, the cross-breeding (1) described above has drawbacks in that it requires a long period of time, and breeding is difficult depending on the plant species.

Regarding the recombination of an environmental stress-tolerant gene (2) described above, Patent Literature 1 discloses introducing a glutathione S-transferase (GST) gene into rice to impart low-temperature stress tolerance. However, genetic recombination still has the issue of low social acceptance.

Moreover, the methods (3) of treatment with compounds described above pose a safety concern to the human body and the environment, depending on the type of the compound. In particular, as the compounds for the methods (3) described above, Patent Literature 2 uses sanguinarine, while Patent Literature 3 uses zerumbone, and sanguinarine disclosed in Patent Literature 2 is a toxic alkaloid.

On the other hand, plant growth and stress tolerance are believed to be in a trade-off relationship, and plants with enhanced stress tolerance often exhibit a growth suppression phenotype (for example, Non-Patent Literature 1). Therefore, it is also important not to inhibit plant growth in enhancing the stress tolerance.

A composition for improving stress tolerance containing red paprika has recently been disclosed (Patent Literature 4). Patent Literature 4 discloses a composition for improving abiotic stress tolerance, the composition comprising a red paprika extract extracted from flesh of red paprika as an active ingredient, and having an effect of improving stress tolerance to one or more stresses selected from the group consisting of temperature stress, chemical stress, light stress, dryness stress, pH stress, salt stress, hypoxic stress, feeding damage stress, physical stress, and disease stress. Example 1 of the literature specifically describes "[T]he calyx was removed from 1 Kg of red paprika, and the red paprika was cut into 1 cm cubes and then crushed in a mixer. Impurities were removed by filtration using a filter cloth and filter paper. The resulting filtrate was concentrated about 10-fold with a rotary evaporator to obtain a concentrate. Subsequently, a C18 column was activated with 100% methanol and washed twice with distilled water, and then the concentrate was passed through the column to obtain a flow-through fraction as a hydrophilic fraction. The hydrophilic fraction containing the red paprika extract obtained above was added in an amount of 0.6 mL (0.1% by volume) to 600 mL of a culture solution in which starved rice plants were grown, and the effect on the rice plants was investigated. As a result, the weight of the rice roots was increased by 66% as compared to that without the addition of the red paprika extract, which revealed the effect of improving the rooting of rice plants."

However, this example shows only the result for the starvation stress, and not for high-temperature stress. Furthermore, the inventors of the present invention produced a hydrophilic fraction containing a red paprika extract extracted from the flesh of red paprika as described in Example 1 of Patent Literature 4, and tested it under high-temperature stress conditions; however, the effect was not found to be excellent.

Thus, the present inventors decided to further advance the development of an agent for improving environmental stress tolerance of a plant.

### Citation List

### Patent Literature

Patent Literature 1: Japanese Patent No. 4582853
Patent Literature 2: Japanese Patent No. 5544450
Patent Literature 3: Japanese Patent No. 6789612
Patent Literature 4: Japanese Patent No. 7317275

### Non-Patent Literature

Non-Patent Literature 1: Aline Cunha da Silva et al., The Yin and Yang in plant breeding: the trade-off between plant growth yield and tolerance to stresses. Biotechnology Research and Innovation, Volume 3, Supplement 1, 2020, Pages 73-79

### Summary of Invention

### Technical Problem

It is an object of the present invention to provide an agent for improving environmental stress tolerance capable of improving the environmental stress tolerance of a plant, without inhibiting the growth of the plant in normal times.

### Solution to Problem

The inventors of the present invention have conducted extensive research and found that treating a plant with capsanthin and/or a fatty acid ester thereof promotes the growth of the plant in normal times and simultaneously enhances the environmental stress tolerance of the plant. The present invention has been completed as a result of further research based on these findings.

In summary, the present invention is as itemized below:

### Item 1.

An agent for improving environmental stress tolerance, comprising capsanthin and/or a fatty acid ester thereof, and intended for a plant.

### Item 2.

The agent for improving environmental stress tolerance according to item 1, wherein the capsanthin and/or fatty acid ester thereof is derived from a plant of the genus *Capsicum* in the family *Solanaceae.*

### Item 3.

The agent for improving environmental stress tolerance according to item 1, wherein the capsanthin and/or fatty acid ester thereof is an extract extracted from at least one plant selected from the group consisting of red paprika, red chili pepper, and red bell pepper, and
wherein the extract is hydrophobic.

### Item 4.

The agent for improving environmental stress tolerance according to item 1, wherein the environmental stress tolerance is high-temperature stress tolerance.

### Item 5.

The agent for improving environmental stress tolerance according to item 1, wherein the environmental stress tolerance is dryness stress tolerance.

### Item 6.

The agent for improving environmental stress tolerance according to item 1, wherein the environmental stress tolerance is salt stress tolerance.

### Item 7.

The agent for improving environmental stress tolerance according to any one of items 1 to 6, wherein the agent activates a stress responsive gene.

### Item 8.

A composition for improving environmental stress tolerance, comprising the agent for improving environmental stress tolerance according to any one of items 1 to 7, the composition further comprising a fertilizer component and/or an additive.

### Item 9.

A method for improving environmental stress tolerance of a plant, the method comprising using the agent for improving environmental stress tolerance according to any one of items 1 to 7 or the composition for improving environmental stress tolerance according to item 8, for a plant or for a soil or a culture solution in which the plant is grown.

### Item 10.

Use of capsanthin and/or a fatty acid ester thereof for improving environmental stress tolerance in a plant.

### Item 11.

A method for improving environmental stress tolerance of a plant, the method comprising:
applying capsanthin and/or a fatty acid ester thereof to a plant.

### Item 12.

The method according to item 11, wherein the improving environmental stress tolerance is increasing expression of an environmental stress tolerance-related gene. Item 13.

The method according to item 12, wherein the environmental stress tolerance-related gene is a gene involved in improving high-temperature stress tolerance.

### Item 14.

A method for producing a plant, comprising:
cultivating a plant by applying capsanthin and/or a fatty acid ester thereof to the plant; and harvesting the plant.

### Item 15.

A plant with improved environmental stress tolerance, obtained by cultivating the plant by applying capsanthin and/or a fatty acid ester thereof to the plant.

### Item 16.

An agent for promoting gene expression, for promoting expression of an environmental stress-tolerant gene in a plant, the agent comprising capsanthin and/or a fatty acid ester thereof.

### Item 17.

An agent for promoting expression of HSFA1a or HSFA3 gene, which are genes for improving high-temperature stress tolerance in a plant, the agent comprising capsanthin and/or a fatty acid ester thereof.

### Item 18.

A composition for improving environmental stress tolerance of a plant, comprising capsanthin and/or a fatty acid ester thereof.

### Item 19.

The composition according to item 18, wherein the plant is a plant in the family *Poaceae,* a plant in the family *Solanaceae,* a plant in the family *Brassicaceae,* a plant in the family *Fabaceae,* a plant in the family *Amaranthaceae,* or a plant in the family *Rosaceae.*

### Item 20.

The composition according to item 18 or 19, wherein the environmental stress is at least one stress selected from the group consisting of high-temperature stress, low-temperature stress, oxidative stress, strong light stress, dryness stress, chemical stress, and wound stress.

### Item 21.

The composition according to item 18 or 19, wherein the environmental stress is high-temperature stress, dryness stress, or salt stress.

### Item 22.

A method for producing a plant with environmental stress tolerance, the method comprising applying capsanthin and/or a fatty acid ester thereof to the plant.

### Item 23.

The method according to item 22, wherein the plant is a plant in the family *Poaceae,* a plant in the family *Solanaceae,* a plant in the family *Brassicaceae,* a plant in the family *Fabaceae,* a plant in the family *Amaranthaceae,* or a plant in the family *Rosaceae.*

### Item 24.

The method according to item 22 or 23, wherein the environmental stress is at least one stress selected from the group consisting of high-temperature stress, low-temperature stress, oxidative stress, strong light stress, dryness stress, chemical stress, and wound stress.

### Item 25.

The method according to item 22 or 23, wherein the environmental stress is high-temperature stress, dryness stress, or salt stress.

### Item 26.

A method for imparting environmental stress tolerance to a plant, comprising applying capsanthin and/or a fatty acid ester thereof to the plant.

### Advantageous Effects of Invention

According to the present invention, it is possible to provide an agent for improving environmental stress tolerance capable of improving the environmental stress tolerance of a plant, without inhibiting the growth of the plant in normal times.

### Brief Description of Drawings

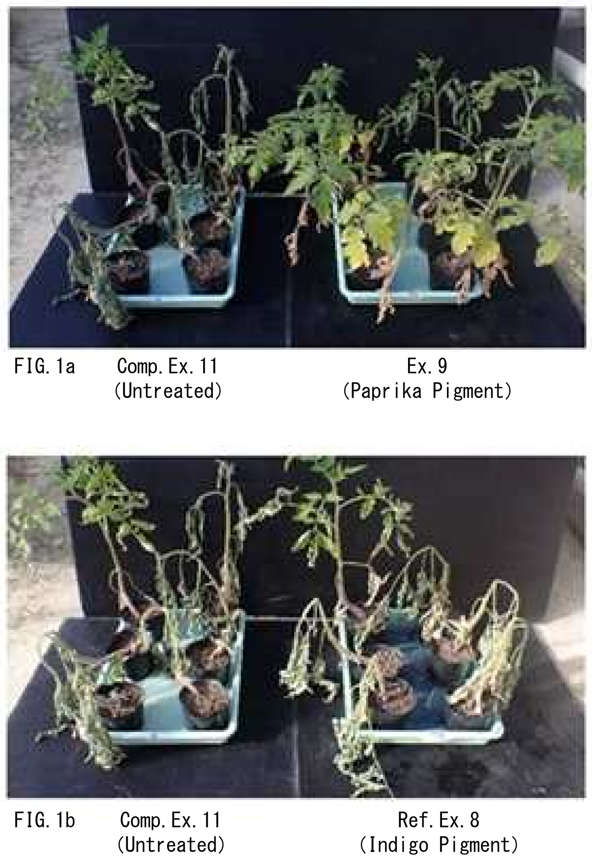

FIG. 1a is a photograph showing the state of tomato seedlings after the test described in Comparative Example 11 or Example 9 (paprika pigment); and FIG. 1b is a photograph showing the state of tomato seedlings after the test described in Comparative Example 11 or Reference Example 8 (indigo pigment).

### Description of Embodiments

### <Agent for Improving Environmental Stress Tolerance>

An agent for improving environmental stress tolerance of the present invention (the agent for improving environmental stress tolerance can also be referred to as an "agent for improving environmental stress tolerance of a plant" or an "agent for imparting stress tolerance to a plant") comprises capsanthin and/or a fatty acid ester thereof as an active ingredient.

As used herein, "capsanthin and/or a fatty acid ester thereof" refers to capsanthin alone, a fatty acid ester of capsanthin alone, and a mixture of capsanthin and a fatty acid ester of capsanthin. Thus, the agent for improving environmental stress tolerance of the present invention may comprise capsanthin alone, may comprise a fatty acid ester of capsanthin alone, or may comprise capsanthin and a fatty acid ester of capsanthin. The agent for improving environmental stress tolerance of the present invention may comprise components other than capsanthin and/or a fatty acid ester thereof.

Capsanthin and/or a fatty acid ester thereof, which is a natural product contained in edible plants, is highly safe for the human body and the environment. However, because capsanthin and/or a fatty acid ester thereof is expensive, their use in agricultural applications is not practical. Therefore, the present invention focuses on a paprika pigment, which is produced from paprika containing capsanthin and/or fatty acid esters thereof, is available at low cost, and is widely used as a food additive.

Capsanthin is a natural red pigment that is one of xanthophylls. Capsanthin or a fatty acid ester thereof is a compound represented by the general formula (I): 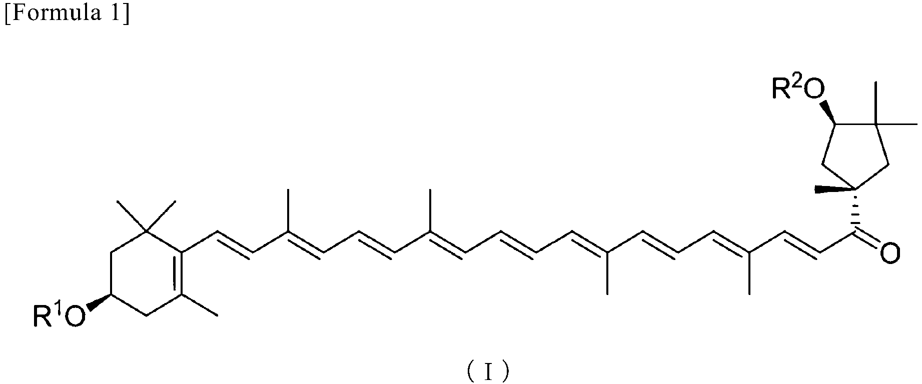 wherein R¹ and R² are the same or different, and each represents a hydrogen atom or a fatty acid-derived acyl group.

That is, capsanthin is a compound with a chemical structure in which both R¹ and R² are hydrogen atoms (H) in the general formula (I).

The fatty acid ester of capsanthin includes a monoester in which a fatty acid-derived acyl group, instead of a hydrogen atom, is attached to either one of R¹ and R² in the general formula (I); and a diester in which fatty acid-derived acyl groups are attached to both R¹ and R² in the structural formula above. Specifically, the fatty acid ester of capsanthin is of the general formula (I) in which R¹ and R² are the same or different, and each represents a hydrogen atom or a fatty acid-derived acyl group, excluding the case where both R¹ and R² are hydrogen atoms (H). That is, the fatty acid ester of capsanthin includes:
a compound in which R¹ is a hydrogen atom and R² is a fatty acid-derived acyl group;
a compound in which R¹ is a fatty acid-derived acyl group and R² is a hydrogen atom; and
a compound in which R¹ is a fatty acid-derived acyl group and R² is a fatty acid-derived acyl group.

Examples of the fatty acid-derived acyl group include, but are not limited to, a residue resulting from removal of a hydroxyl group (OH) from a saturated or unsaturated fatty acid having 8 to 22 carbon atoms. As used herein, the residue resulting from removal of a hydroxyl group (OH) from a saturated or unsaturated fatty acid having 8 to 22 carbon atoms can also be referred to as an R¹CO group or an R²CO group. R¹ and R² are the same or different, and may each be, for example, a C₇₋₂₁ alkyl group, a C₇₋₂₁ alkenyl group, or a C₇₋₂₁ alkynyl group.

Examples of the saturated fatty acid having 8 to 22 carbon atoms include caprylic acid, capric acid, lauric acid, myristic acid, palmitic acid, stearic acid, eicosanoic acid (arachidic acid), and behenic acid.

Examples of the unsaturated fatty acid having 8 to 22 carbon atoms include palmitoleic acid, oleic acid, erucic acid, linoleic acid, α-linolenic acid, and arachidonic acid.

The fatty acid-derived acyl group is preferably an acyl group derived from a saturated fatty acid having 12 to 20 carbon atoms, and more preferably a lauroyl group, a myristoyl group, a palmitoyl group, or an eicosanoyl group, for example.

Examples of the fatty acid monoester of capsanthin include capsanthin monomyristate and capsanthin monoeicosanoate.

Examples of the fatty acid diester of capsanthin include capsanthin dilaurate, capsanthin lauryl myristate, capsanthin dimyristate, capsanthin myristyl palmitate, and capsanthin dipalmitate.

Capsanthin and/or a fatty acid ester thereof may be any of a naturally-derived product such as a natural extract, a chemically-synthesized product, a microorganism-derived product obtained by a microbial fermentation method, and the like. A commercially available product (for example, products manufactured by CaroteNature) can be used as capsanthin and/or a fatty acid ester thereof. Capsanthin and/or a fatty acid ester thereof is preferably a naturally-derived product, and more preferably a plant-derived product, because it can be obtained without relying on a chemical means such as chemical synthesis.

Capsanthin and/or a fatty acid ester thereof is contained in red fruits (such as red chili pepper, red paprika, and red bell pepper) of plants of the genus *Capsicum* in the family *Solanaceae.* That is, capsanthin and/or a fatty acid ester thereof is known to be a hydrophobic natural pigment contained in red fruits of plants of the genus *Capsicum* in the family *Solanaceae* (hereinafter, sometimes also referred to as a "pigment of a plant of the genus *Capsicum* in the family *Solanaceae*")*.* As used herein, "hydrophobic" includes the meaning of lipophilic or fat-soluble. Capsanthin and/or a fatty acid ester thereof, which is an active ingredient of the agent for improving environmental stress tolerance of the present invention, can be obtained from a plant containing the capsanthin and/or fatty acid ester thereof. The capsanthin and/or fatty acid ester thereof is preferably derived from a plant of the genus *Capsicum* in the family *Solanaceae.* A commercially available product (for example, products manufactured by San-Ei Gen F. F. I., Inc.) can be used as the pigment of a plant of the genus *Capsicum* in the family *Solanaceae.*

A method for obtaining capsanthin and/or a fatty acid ester thereof, which is an active ingredient of the agent for improving environmental stress tolerance of the present invention, from a plant containing capsanthin and/or a fatty acid ester thereof, is hereinafter described in detail.

The plant-derived product includes a plant itself and a plant extract.

Examples of the plant itself include dried and crushed products of fruits (such as red chili pepper, red paprika, and red bell pepper) containing capsanthin and/or a fatty acid ester thereof; and powders, granules, slurries or pastes of the dried and crushed products.

The plant extract can be obtained by immersing or contacting a fruit containing capsanthin and/or a fatty acid ester thereof (a plant containing a red pigment, such as red chili pepper, red paprika or red bell pepper) in or with an extraction solvent to perform an extraction treatment. The capsanthin and/or fatty acid ester thereof is preferably an extract extracted from at least one plant selected from the group consisting of red paprika, red chili pepper, and red bell pepper.

The extraction treatment can be performed either under normal pressure or under pressure. The extraction temperature is typically in the range of 0 to 150°C, and preferably from room temperature to 120°C. The extraction time is typically 1 minute to 24 hours, and preferably 1 minute to 3 hours. Examples of the solvent used for extraction include, but are not specifically limited to, water; acids or bases such as an aqueous hydrochloric acid solution, an aqueous sulfuric acid solution, an aqueous acetic acid solution, and an aqueous sodium hydroxide solution; alcohols such as methanol, ethanol, isopropanol, polyethylene glycol, glycerin, and sorbitol; ketones such as acetone and dimethyl ketone; ethyl acetate, toluene, diethyl ether, methylene chloride, dimethyl sulfoxide, chloroform, hexane, and the like; and mixtures thereof. Among these, water, dilute hydrochloric acid, acetic acid, an alcohol, or a mixture thereof is desirable in view of ease of handling and safety when formed into a composition. Specific examples of usable extraction treatments include, but are not specifically limited to, solvent extraction treatment, subcritical water extraction treatment, hot extraction treatment, pressurized extraction treatment, pressurized hot water extraction treatment, extraction treatment with a Soxhlet extractor, supercritical extraction treatment, ultrasonic extraction treatment, and extraction treatment by enzymatic degradation.

The solvent extraction treatment refers to an extraction treatment in which a plant material is immersed in an appropriate solvent as described above and allowed to stand for a certain period of time. The treatment temperature may be room temperature, or the treatment may be performed by heating to a temperature lower than the boiling point of the solvent. It is also possible to promote extraction by agitating the solvent during immersion and/or applying pressure to the plant material. A solvent extract according to an embodiment of the present invention is obtained by immersing a material to be extracted, such as a fruit of red chili pepper, red paprika, or red bell pepper, in dilute hydrochloric acid heated to 50 to 70°C for 10 minutes to 24 hours, preferably 30 minutes to 6 hours, and more preferably 1 hour to 3 hours.

The hot extraction treatment refers to an extraction treatment using a water-containing solvent at 50°C or more. A hot extract according to an embodiment of the present invention is obtained by contacting or immersing a material to be extracted, such as a fruit of red chili pepper, red paprika, or red bell pepper, with or in a water-containing solvent at 50°C or more, and heating or boiling the material for 3 minutes to 24 hours, preferably 3 minutes to 3 hours, and more preferably 5 to 60 minutes.

The subcritical water extraction treatment refers to an extraction treatment performed using a solvent in a subcritical state under conditions at a temperature and a pressure lower than those at the critical point (the critical point of water is 22 MPa, 374°C). A subcritical water extract according to an embodiment of the present invention is obtained by subjecting a material to be extracted, such as a fruit of red chili pepper, red paprika, or red bell pepper, to the extraction treatment for 1 minute to 24 hours, preferably 1 to 60 minutes, and more preferably 3 to 10 minutes, using an aqueous solvent or a mixed solvent of water and a hydrophilic solvent such as methanol or acetic acid placed under a subcritical state. Preferred subcritical conditions are a pressure of 0.2 to 15 MPa and a temperature of 100 to 200°C.

A fresh or dried plant material can be used to obtain a plant extract by the above-described methods, from a plant containing capsanthin and/or a fatty acid ester thereof, such as red chili pepper, red paprika, or red bell pepper. However, when the plant material is not sufficiently dried or is allowed to stand for a long period of time after drying, the plant material is susceptible to mold, which may lower the stability of the extracted capsanthin and/or fatty acid ester thereof. Therefore, even after dried, the plant material is preferably subjected to an extraction treatment soon.

The plant extract obtained as described above may be concentrated using a rotary evaporator or the like to obtain a plant concentrate containing capsanthin and/or a fatty acid ester thereof. Concentration may be performed using a centrifugal evaporator or by freeze-drying. The concentration factor in concentration is preferably 5 to 30 times, and more preferably 7.5 to 20 times. When the concentration factor is 5 times or more, the amount of the agent for improving environmental stress tolerance added to plants is reduced, which tends to improve handleability and reduce transportation costs. On the other hand, when the concentration factor is 30 times or less, the agent for improving environmental stress tolerance forms less precipitates, which tends to facilitate handling.

The plant extract obtained as described above is obtained in a liquid state extracted in an extraction solvent, and a base or an acid may be added to the solvent for neutralization. The plant extract may be further treated by using a vacuum concentration method or a gel adsorption method to obtain a liquid with an increased concentration of the capsanthin and/or fatty acid ester thereof. Moreover, the plant extract may be processed into a powder form by using a spray dryer, a vacuum dryer, or the like. Furthermore, the plant extract processed into a powder form may be dissolved in a solvent other than the extraction solvent to facilitate the handling of the plant extract or to increase the storage stability. To increase the purity of the capsanthin and/or fatty acid ester thereof contained in the plant extract, the plant extract may be purified by adsorption purification with an ion-exchange resin, silica gel, activated carbon, or the like, or by column chromatography, recrystallization, or the like, to obtain a plant extract containing the capsanthin and/or fatty acid ester thereof with high purity. Capsanthin and/or a fatty acid ester thereof is a hydrophobic component; thus, when the plant extract is fractionated by column chromatography, the capsanthin and/or fatty acid ester thereof is contained in a hydrophobic fraction (a fat-soluble fraction or lipophilic fraction).

Examples of forms of the pigment of a plant of the genus *Capsicum* in the family *Solanaceae* include, but are not specifically limited to, a liquid such as an emulsion or a suspension, a slurry, a paste, and a powder or granules obtained by pulverizing the pigment in a solid state, obtainable by standard methods.

As described above, the pigment of a plant of the genus *Capsicum* in the family *Solanaceae* may be an extract (hereinafter, also referred to as an "extract of a plant of the genus *Capsicum* in the family *Solanaceae*") extracted from a plant of the genus *Capsicum* in the family *Solanaceae* by a standard method. A commercially available product (for example, products manufactured by San-Ei Gen F. F. I., Inc.) can be used as the pigment of a plant of the genus *Capsicum* in the family *Solanaceae.*

As used herein, the extract of a plant of the genus *Capsicum* in the family *Solanaceae* may be, for example, an extract obtained by the process of pulverizing a plant of the genus *Capsicum* in the family *Solanaceae,* mixing the resulting powder with an organic solvent and/or water, and extracting the mixture.

The plant extract obtained as described above or the pigment of a plant of the genus *Capsicum* in the family *Solanaceae* can be used as is, as the agent for improving environmental stress tolerance of the present invention. However, the plant extract may be subjected to a secondary treatment without losing the activity of the capsanthin and/or fatty acid ester thereof as an active ingredient and without adversely affecting the treated plant, to be used as the agent for improving environmental stress tolerance of the present invention. The agent for improving environmental stress tolerance of the present invention may contain not only a plant extract, but also capsanthin and/or a fatty acid ester thereof obtained by chemical synthesis, or capsanthin and/or a fatty acid ester thereof obtained by microbial fermentation. Furthermore, the agent for improving environmental stress tolerance of the present invention is not limited to a liquid, and may be processed into a powder, granules, a suspension, or the like by a conventional method. Edible paprika pigments or capsicum pigments that are registered as food additives throughout the world and are available at low cost are preferably used as the capsanthin and/or fatty acid ester thereof. A commercially available product (for example, products manufactured by San-Ei Gen F. F. I., Inc.) can be used as a paprika pigment or capsicum pigment.

The proportion of the active ingredient in the agent for improving environmental stress tolerance can be appropriately determined according to the dosage form, mode of application, and the like described below. For example, the concentration of capsanthin and/or a fatty ester thereof in the agent for improving environmental stress tolerance of the present invention is typically 0.001 to 1000000 mg/L, preferably about 0.3 to 30000 mg/L, and more preferably about 1 to 3000 mg/L, for example. Even when applied at such a low concentration, the agent for improving environmental stress tolerance of the present invention can improve the environmental stress tolerance of the plant to be protected. The environmental stress tolerance of the plant to be protected can be sufficiently improved by applying the agent for improving environmental stress tolerance of the present invention only once throughout the entire cultivation period of the plant; however, the agent for improving environmental stress tolerance may be preferably applied a plurality of times to sufficiently increase the environmental stress tolerance. The content of capsanthin and/or a fatty acid ester thereof in the paprika pigment used in the present invention is, for example, typically 0.001 to 3000000 mg, preferably about 0.1 to 30000 mg, and more preferably about 1 to 3000 mg, in 100 g of the paprika pigment, although not specifically limited thereto.

The dosage form of the agent for improving environmental stress tolerance of the present invention is not specifically limited as long as it is an agriculturally acceptable dosage form (form of use), and includes, for example, wettable powders, water dispersible granules, dry flowables, water-soluble powders, emulsifiable concentrates, liquid formulations (also referred to as liquid or liquids), oil solutions, pastes, flowables such as dispersants, suspensions in water, and emulsions in water, capsules, dust formulations, granular formulations, fine granules, granules, baits, tablets, sprays, fogs, and aerosols. The agent for improving environmental stress tolerance of the present invention can be prepared into these dosage forms, by using various additives (adjuvants) conventionally used in the technical field of agricultural and horticultural chemicals, as appropriate.

The agent for improving environmental stress tolerance of the present invention may consist only of the active ingredient described above, but may also contain, in addition to the active ingredient described above, various fertilizer components, additives, and the like according to the dosage form, mode of use, mode of application, and the like described below.

### <Composition for Improving Environmental Stress Tolerance>

A composition for improving environmental stress tolerance of the present invention comprises the agent for improving environmental stress tolerance described above, and further comprises a fertilizer component and/or an additive.

In the present invention, a fertilizer component may also be used with capsanthin and/or a fatty acid ester thereof. Therefore, the present invention includes a composition for improving environmental stress tolerance, comprising the agent for improving environmental stress tolerance, the composition further comprising a fertilizer component. The composition for improving environmental stress tolerance can also be referred to as a composition for use in improving environmental stress tolerance, an environmental stress tolerance-improving composition, or the like.

The fertilizer component is not specifically limited as long as it is an agriculturally acceptable fertilizer component, and includes, for example, N (nitrogen ingredient), P (phosphate ingredient), K (potash ingredient), Ca (lime ingredient), Mg (magnesia ingredient), S (sulfur ingredient), B (boron ingredient), Fe (iron ingredient), Mn (manganese ingredient), Cu (copper ingredient), Zn (zinc ingredient), Mo (molybdenum ingredient), and Si (silicic acid ingredient), and further includes inorganic substances (inorganic fertilizers) and organic substances (organic fertilizers) used as supply sources thereof. Examples of such inorganic substances include ammonium nitrate, potassium nitrate, ammonium sulfate, ammonium chloride, ammonium phosphate, urea, ammonium carbonate, potassium phosphate, calcium superphosphate, potassium sulfate, potassium chloride, calcium nitrate, slaked lime, calcium carbonate, magnesium sulfate, magnesium hydroxide, magnesium carbonate, boric acid, manganese sulfate, manganese chloride, chelated iron, ferric chloride, chelated copper, chelated zinc, and ammonium molybdate. Examples of such organic substances include poultry manure, cow manure, bark compost, seaweed, plant extract components, vitamins (vitamin B1, vitamin C, and the like), amino acids (glycine, glutamic acid, sodium glutamate, and the like), and salts thereof.

The concentration of the fertilizer component in the composition for improving environmental stress tolerance when applied to a plant by foliar application is such that the concentration of each of the N, P, and K components is preferably 0 to 5000 mg/L, more preferably 0 to 1000 mg/L, and still more preferably 0 to 500 mg/L. When the composition for improving environmental stress tolerance is applied from underground in soil cultivation and hydroponics, the concentration of each of the N, P, and K components is preferably 0 to 5000 mg/L, more preferably 0 to 1000 mg/L, and still more preferably 0 to 500 mg/L. In the case of foliar application, the total concentration of all the fertilizer components is preferably 0.01 to 10000 mg/L, more preferably 10 to 5000 mg/L, and still more preferably 50 to 2000 mg/L. When the composition for improving environmental stress tolerance is applied from underground in soil cultivation and hydroponics, the total concentration of all the fertilizer components is preferably 0.01 to 10000 mg/L, more preferably 10 to 5000 mg/L, and still more preferably 50 to 2000 mg/L.

The composition for improving environmental stress tolerance of the present invention may further contain an additive. Therefore, the present invention includes a composition for improving environmental stress tolerance, comprising the agent for improving environmental stress tolerance, the composition further comprising an additive. The present invention also includes a composition for improving environmental stress tolerance, comprising the agent for improving environmental stress tolerance, the composition further comprising a fertilizer component and an additive.

The additive is not specifically limited as long as it is an agriculturally acceptable additive, and includes, for example, antioxidants, carriers, surfactants, thickeners, extenders, binders, preservatives, pH adjusters, volatilization inhibitors, and anti-settling agents.

When the composition for improving environmental stress tolerance of the present invention contains the additive, the concentration of the additive can be appropriately adjusted within a range in which the efficacy of the capsanthin or fatty acid ester thereof is not lost.

The composition for improving environmental stress tolerance of the present invention may further contain other known active compounds, for example, insecticides, acaricides, nematicides, fungicides, synergists, and plant conditioners.

A surfactant is preferably used as the additive. The use of a surfactant with capsanthin and/or a fatty acid ester thereof can improve wettability, adhesion, permeability, rain resistance, and the like of the capsanthin and/or fatty acid ester thereof to a plant surface or the like.

Water-soluble surfactants can be used as the surfactant, for example, nonionic surfactants, cationic surfactants, amphoteric surfactants, and anionic surfactants.

Examples of nonionic surfactants include sorbitan fatty acid esters, polyoxyalkylene sorbitan fatty acid esters, polyoxyalkylene fatty acid esters, glycerin fatty acid esters, polyoxyalkylene glycerin fatty acid esters, polyglycerin fatty acid esters, polyoxyalkylene polyglycerin fatty acid esters, sucrose fatty acid esters, resin acid esters, polyoxyalkylene resin acid esters, polyoxyalkylene alkyl ethers, polyoxyalkylene alkylphenyl ethers, alkyl(poly)glycosides, and polyoxyalkylene alkyl(poly)glycosides. Preferred nonionic surfactants include ether group-containing nonionic surfactants containing no nitrogen atom; and ester group-containing nonionic surfactants. Particularly preferred nonionic surfactants include ester group-containing nonionic surfactants containing an oxyalkylene group, such as polyoxyalkylene sorbitan fatty acid esters, polyoxyalkylene fatty acid esters, polyoxyalkylene glycerin fatty acid esters, and polyoxyalkylene polyglycerin fatty acid esters; and ether group-containing nonionic surfactants containing no nitrogen atom and having a sugar backbone, such as alkyl(poly)glycosides.

Examples of anionic surfactants include carboxylic acid-based surfactants, sulfonic acid-based surfactants, sulfuric acid ester-based surfactants, and phosphoric acid ester-based surfactants. Examples of carboxylic acid-based surfactants include C₆₋₃₀ fatty acids or salts thereof, polycarboxylic acid salts, polyoxyalkylene alkyl ether carboxylic acid salts, polyoxyalkylene alkyl amide ether carboxylic acid salts, rosin acid salts, dimer acid salts, polymer acid salts, and tall oil fatty acid salts. Examples of sulfonic acid-based surfactants include alkylbenzenesulfonic acid salts, alkylsulfonic acid salts, alkylnaphthalenesulfonic acid salts, naphthalenesulfonic acid salts, diphenyl ether sulfonic acid salts, alkylnaphthalenesulfonic acid condensate salts, and naphthalenesulfonic acid condensate salts. Examples of sulfuric acid ester-based surfactants include alkyl sulfuric acid ester salts, polyoxyalkylene alkyl sulfuric acid ester salts, polyoxyalkylene alkyl phenyl ether sulfuric acid ester salts, tristyrenated phenol sulfuric acid ester salts, polyoxyalkylene distyrenated phenol sulfuric acid ester salts, and alkylpolyglycoside sulfuric acid salts. Examples of phosphoric acid ester-based surfactants include alkyl phosphoric acid ester salts, alkylphenyl phosphoric acid ester salts, polyoxyalkylene alkyl phosphoric acid ester salts, and polyoxyalkylene alkylphenyl phosphoric acid ester salts. Examples of the salts include metal salts (such as salts of Na, K, Ca, Mg, and Zn), ammonium salts, alkanolamine salts, and aliphatic amine salts. Preferred anionic surfactants are carboxylic acid-based surfactants and phosphoric acid ester-based surfactants.

Examples of amphoteric surfactants include amino acid-based surfactants, betaine-based surfactants, imidazoline-based surfactants, and amine oxide-based surfactants. Examples of amino acid-based surfactants include acylamino acid salts, acylsarcosine acid salts, acyloylmethylaminopropionic acid salts, alkylaminopropionic acid salts, and acylamide ethylhydroxyethylmethylcarboxylic acid salts. Examples of betaine-based surfactants include alkyldimethylbetaine, alkylhydroxyethylbetaine, acylamide propylhydroxypropylammonia sulfobetaine, acylamide propylhydroxypropylammonia sulfobetaine, and ricinoleic acid amide propyl dimethylcarboxy methylammonia betaine. Examples of imidazoline-based surfactants include alkylcarboxy methylhydroxy ethylimidazolinium betaine and alkylethoxy carboxy methylimidazolinium betaine. Examples of amine oxide-based surfactants include alkyldimethylamine oxide, alkyldiethanolamine oxide, and alkylamidopropylamine oxide.

The above-mentioned surfactants may be used alone or in combinations of two or more.

The concentration of the surfactant in the composition for improving environmental stress tolerance when applied to a plant by foliar application is preferably 0.01 to 1000 mg/L, more preferably 0.03 to 300 mg/L, and still more preferably 0.1 to 100 mg/L. The concentration of the surfactant in the composition for improving environmental stress tolerance when applied to a plant from aboveground in soil cultivation and hydroponics is preferably 0.01 to 1000 mg/L, more preferably 0.03 to 300 mg/L, and still more preferably 0.1 to 100 mg/L.

The mass ratio between the capsanthin and/or fatty acid ester thereof and the surfactant, expressed as capsanthin and/or fatty acid ester thereof : surfactant, is preferably 1:0.001 to 1000, more preferably 1:0.01 to 100, and still more preferably 1:0.1 to 10, in view of improving solubility.

According to the present invention, the agent for improving environmental stress tolerance comprising a capsanthin and/or a fatty acid ester thereof is applied to an aboveground or underground portion of a plant, so as to promote growth of the plant under normal conditions and simultaneously enhance the stress tolerance that can promote growth of the plant, even in an environment where stresses occur.

Examples of stresses to which tolerance can be improved by the agent for improving environmental stress tolerance of the present invention include high temperature, dryness, low temperature, heavy rain, ultraviolet light, and salts. Examples of environmental stress tolerances that can be improved by the agent for improving environmental stress tolerance include high-temperature stress tolerance, dryness stress tolerance, and salt stress tolerance. Specifically, the term "high-temperature stress tolerance" refers to tolerance to a high temperature higher than a temperature suitable for growth of an intended plant. The term "dryness stress tolerance" refers to tolerance to the lack of water for a certain period of time. The term "salt stress tolerance" refers to tolerance to a high salt concentration in a plant growth environment, including, for example, water in a soil or water in contact with foliage.

The phrase "improving environmental stress tolerance" is intended to mean that a plant is determined to be in a better state than a control plant, in terms of the growth state of the plant (the fresh weight of the plant, the degree of elongation, and the like), the state visually evaluated from the appearance, and the like.

The plant for which the agent for improving environmental stress tolerance of the present invention is intended is not specifically limited. Examples of useful plants for which the agent for improving environmental stress tolerance of the present invention can be used include, but are not specifically limited to, plants in the family *Solanaceae,* such as tomatoes, eggplants, bell peppers, chili peppers, and potatoes; plants in the family *Poaceae,* such as rice, barley, wheat, rye, corn, and sugarcane; plants in the family *Fabaceae,* such as soybeans, adzuki beans, broad beans, peas, common beans, and peanuts; plants in the family *Rosaceae,* such as apples, pears, peaches, *ume,* cherries, strawberries, and roses; plants in the family *Brassicaceae,* such as cabbage, broccoli, Chinese cabbage, Japanese radish, turnip, and *komatsuna* (Japanese mustard spinach; *Brassica rapa var. perviridis*); plants in the family *Cucurbitaceae,* such as pumpkins, cucumbers, oriental melons, watermelons, and melons; plants in the family *Amaryllidaceae,* such as onions, leek, garlic, and Chinese chives; plants in the family *Lamiaceae,* such as perilla, basil, thyme, and lavender; plants in the family *Amaranthaceae,* such as spinach and sugar beet; plants in the family *Umbelliferae,* such as carrots and parsley; plants in the family *Asteraceae,* such as lettuce, burdocks, and chrysanthemum; plants in the family *Convolvulaceae,* such as sweet potatoes; and other examples include fruit trees, such as citruses, grapes, chestnuts, almonds, and bananas; root vegetables, such as taro and lotus roots; crops for processing use, such as cotton, hemp, hops, olives, rubber, coffee, and tea; pasture grasses, such as orchardgrass, sorghum, timothy, clover, and alfalfa; grasses, such as *Zoysia tenuifolia* and bentgrass; flavoring and ornamental crops, such as pepper and ginger; flowers and ornamental plants, such as carnations and orchids; garden trees, such as ginkgo, *Prunus* species, and *Aucuba* japonica; and forest trees, such as *Abies sachalinensis* species, *Picea jezoensis* species, *Pinus* species, hiba cedar, Japanese cedar, and Japanese cypress.

The environmental stress tolerance may be improved not only for the whole plants mentioned above, but also for at least one plant organ such as a flower, a leaf, a fruit, a stem, or a root.

The mode of application of the agent or composition for improving environmental stress tolerance of the present invention is not specifically limited as long as it is a known mode (or a mode that may be developed in the future) as a mode of use of an agrochemical or a fertilizer, and examples include spraying; atomizing; dripping; applying; adding; immersing; and mixing or dissolving the agent or composition in a plant growth environment (such as in a soil, in water, in a solid culture medium, in a liquid culture medium, or in a culture solution).

### <Method for Improving Environmental Stress Tolerance of a Plant>

The present invention includes a method for improving environmental stress tolerance of a plant, the method comprising using the agent or composition for improving environmental stress tolerance described above, for a plant or for a soil or a culture solution in which the plant is grown. By using this method, it is possible to promote the growth of the plant in normal times and simultaneously enhance the environmental stress tolerance of the plant, inexpensively and simply. The present invention also includes use of capsanthin and/or a fatty acid ester thereof for improving stress tolerance of a plant.

In the method for improving environmental stress tolerance of a plant, the agent or composition for improving environmental stress tolerance of the present invention can be applied to a plant or a portion (for example, a seed, a seedling, or a mature plant) of the plant at any growth stage including pre- or post-germination. The agent or composition for improving environmental stress tolerance of the present invention can be applied not only to a plant itself, but also to a soil, a culture medium, or a culture solution in which the plant is grown. The growth of a plant can be promoted by applying the agent or composition for improving environmental stress tolerance to a plant in a growth stage or to a soil, a culture medium, or a culture solution in which the plant is grown.

The agent or composition for improving environmental stress tolerance may be applied to a plant once or a plurality of times. When applied at a plurality of timings, the agent or composition for improving environmental stress tolerance may be applied once or a plurality of times at each application timing.

### <Agent for Improving Environmental Stress Tolerance That Activates a Stress Responsive Gene>

The present invention includes an agent for improving environmental stress tolerance that activates a stress responsive gene. Examples of stress responsive genes include, but are not specifically limited to, genes generally known as response indicators to temperature stress, chemical stress, light stress, dryness stress, pH stress, salt stress, hypoxic stress, feeding damage stress, physical stress, and disease stress.

For example, use of a paprika pigment as the agent for improving environmental stress tolerance that activates a stress responsive gene of the present invention can increase or promote the expression level of a gene that contributes to thermotolerance (for example, HSF and HSP genes).

"HSF genes" refers to heat shock transcription factors (HSFs), which are a group of transcription factors involved in the expression control of a group of heat shock proteins.

Examples of HSF genes include HSFA1 (such as HSFA1a, HSFA1b, HSFA1d, and HSFA1e), and HSFA3.

Since the expression of an HSF gene has been reported to contribute to the acquisition of high-temperature stress tolerance, the use of a paprika pigment is expected to improve the high-temperature stress tolerance of crops. Furthermore, since genes similar to HSF genes are extensively conserved in plants in the family *Brassicaceae,* soybeans, poplars, tomatoes, castor beans, rice, *Brachypodium distachyon,* corn, and the like, a paprika pigment is believed to have the effect of changing the gene expression level in many plants other than tomatoes (Reference Literature (Non-Patent Literature 2): Klaus-Dieter Scharf et al., The plant heat stress transcription factor (Hsf) family: Structure, function and evolution. Biochimica et Biophysica Acta. Volume 1819 (2), 2012, Pages 104 to 119).

### Examples

Various formulation examples containing the compound of the present invention will be hereinafter described in detail; however, the compound of the present invention, auxiliary components, the amounts thereof added, and the like are not limited only to the following formulation examples.

### Formulation Example 1

Ingredient A containing capsanthin: 0.1-10%
Nitrogen ingredient B: 1-40%
Phosphate ingredient C: 1-20%
Potash ingredient D: 10-40%
Antioxidant E: 0.1-10%

The ingredients shown above were uniformly mixed to obtain a powder fertilizer.

### Formulation Example 2

Ingredient A containing capsanthin: 0.1-10%
Nitrogen ingredient B: 1-40%
Phosphate ingredient C: 1-20%
Potash ingredient D: 10-40%
Antioxidant E: 0.1-10%

The ingredients shown above were uniformly mixed, kneaded with an appropriate amount of added water, granulated, and then dried to obtain a granular formulation.

### Formulation Example 3

Ingredient A containing capsanthin: 0.1-10%
Nitrogen ingredient B: 1-40%
Phosphate ingredient C: 1-20%
Potash ingredient D: 10-40%
Antioxidant E: 0.1-10%
Thickener F: 0.1-10%

The ingredients shown above were uniformly mixed to obtain a paste.

### Formulation Example 4

Ingredient A containing capsanthin: 0.1-10%
Nitrogen ingredient B: 1-10%
Phosphate ingredient C: 1-10%
Potash ingredient D: 10-50%
Antioxidant E: 0.1-10%

The ingredients shown above were uniformly dissolved or suspended in water to obtain a liquid formulation (liquid fertilizer).

### Formulation Example 5

Ingredient A containing capsanthin: 0.1-10%
Nitrogen ingredient B: 1-10%
Phosphate ingredient C: 1-10%
Potash ingredient D: 10-50%
Antioxidant E: 0.1-10%

The ingredients shown above were uniformly mixed and dissolved in water to obtain an emulsifiable concentrate.

The present invention will be hereinafter described in more detail with examples and test examples; however, the technical scope of the present invention is not limited to these examples.

### <Test Example 1 (Test for Confirming Growth-Promoting Effect of Red Paprika Extract in Rice Hydroponics)>

### Example 1

In accordance with the method described in Japanese Patent No. 7317275 (AGRI SMILE Co., Ltd), an extract was extracted from red paprika flesh, and separated into hydrophilic and hydrophobic fractions, as described below.

First, the calyx was removed from 1 Kg of red paprika, and the red paprika was cut into 1 cm cubes and then crushed in a mixer. Impurities were removed by filtration using a filter cloth and filter paper. The resulting filtrate was concentrated about 10-fold with a rotary evaporator to obtain a concentrate. Subsequently, a C18 column was activated with 100% methanol and washed twice with distilled water, and then the concentrate was passed through the column to obtain a hydrophilic fraction. Subsequently, acetone was passed through the column to obtain a hydrophobic fraction.

The following experiment was performed using the hydrophobic fraction (Example 1) extracted from red paprika obtained above.

A liquid culture medium prepared by diluting OAT House Fertilizer (registered trademark) Formulation A, manufactured by OAT Agrio Co., Ltd., was placed in an erlenmeyer flask. Then, the hydrophobic fraction (Example 1) with each concentration (% by volume) shown in Table 1 was added to the liquid culture medium. Next, paddy rice *(Koshihikari)* was grown to seedlings in culture soil, and then the roots were cut to a predetermined length. Five of the seedlings were inserted into each erlenmeyer flask. Then, after cultivation at 25°C for 6 days, the length of the roots of the rice was measured, and the length of regenerated roots was calculated.

### Comparative Examples 1 and 2

As comparative examples, the same test as in Example 1 was repeated, except for using the liquid culture medium without addition of the hydrophobic fraction (Comparative Example 1: untreated) or the liquid culture medium containing the hydrophilic fraction (Comparative Example 2) instead of the hydrophobic fraction.

### Reference Example 1

In Reference Example 1, the same test as in Example 1 was repeated, except for using the liquid culture medium containing a commercially available material for improving high-temperature tolerance (material A) at the dilution factor shown in Table 1, instead of the hydrophilic or hydrophobic fraction. The dilution factor is shown for Reference Example 1, because the content of the active ingredient in the commercially available product is unknown. For the same reason, the concentration is hereinafter shown in terms of dilution factor for reference examples.

The results are shown in Table 1. The results of Example 1, Comparative Example 2, and Reference Example 1 are expressed as the ratio (%) with respect to the result of Comparative Example 1 (untreated group) taken as 100.

**[Table 1]**

| Table 1 | Name of Test Component /Test Agent | Concentration (% by volume) /Dilution Factor | 25°C (Growth Promotion) |
|---|---|---|---|
| | | | Ratio to Untreated Group (%) |
| Comp. Ex. 1 | Untreated | - | 100 |
| Comp. Ex. 2 | Hydrophilic Fraction | 0.13 | 101 |
| | | 0.10 | 103 |
| Ex. 1 | Hydrophobic Fraction | 0.13 | 105 |
| | | 0.10 | 112 |
| | | 0.07 | 101 |
| Ref. Ex. 1 | Material for Improving High-Temperature Tolerance (Material A) | 100,000-fold | 104 |

### <Results>

As can be seen from the results in Table 1, the treatment with the hydrophobic fraction (Example 1) and the hydrophilic fraction (Comparative Example 2) extracted from red paprika was shown to promote the growth under a 25°C condition, which is assumed to be stress-free, in every group.

### <Test Example 2 (Test of High-Temperature Stress Tolerance Improvement by Red Paprika Extract in Rice Hydroponics)>

The following experiment was performed using the hydrophobic and hydrophilic fractions containing the red paprika extract obtained in Test Example 1.

### Example 2

A liquid culture medium prepared by diluting OAT House Fertilizer (registered trademark) Formulation A, manufactured by OAT Agrio Co., Ltd., was placed in an erlenmeyer flask. Then, the hydrophobic fraction (Example 2) with each concentration (% by volume) shown in Table 2 was added to the liquid culture medium. Next, paddy rice *(Koshihikari)* was grown to seedlings in culture soil, and then the roots were cut to a predetermined length. Five of the seedlings were inserted into each erlenmeyer flask. Then, after cultivation at 35°C for 6 days, the length of the roots of the rice was measured, and the length of regenerated roots was calculated.

### Comparative Examples 3 and 4

As comparative examples, the same test as in Example 2 was repeated, except for using the liquid culture medium without addition of the hydrophobic fraction (Comparative Example 3) or the liquid culture medium containing the hydrophilic fraction (Comparative Example 4) instead of the hydrophobic fraction.

### Reference Example 2

In Reference Example 2, the same test as in Example 2 was repeated, except for using the liquid culture medium containing a commercially available material for improving high-temperature tolerance (material A) at the dilution factor shown in Table 2, instead of the hydrophilic or hydrophobic fraction. The dilution factor is shown for Reference Example 2, because the content of the active ingredient in the commercially available product is unknown.

The results are shown in Table 2. The results of Example 2, Comparative Example 4, and Reference Example 2 are expressed as the ratio (%) with respect to the result of Comparative Example 3 (untreated group) taken as 100.

**[Table 2]**

| Table 2 | Name of Test Component /Test Agent | Concentration (% by volume) /Dilution Factor | 35°C (High-Temperature Stress) |
|---|---|---|---|
| | | | Ratio to Untreated Group (%) |
| Comp. Ex. 3 | Untreated | - | 100 |
| Comp. Ex. 4 | Hydrophilic Fraction | 0.13 | 113 |
| | | 0.10 | 101 |
| | | 0.07 | 126 |
| | | 0.03 | 117 |
| Ex. 2 | Hydrophobic Fraction | 0.13 | 142 |
| | | 0.10 | 120 |
| | | 0.07 | 132 |
| | | 0.03 | 145 |
| Ref. Ex. 2 | Material for Improving High-Temperature Tolerance (Material A) | 100,000-fold | 120 |

### <Results>

As can be seen from the results in Table 2, the hydrophobic fraction (Example 2) and the hydrophilic fraction (Comparative Example 4) extracted from red paprika were shown to promote root elongation under high-temperature conditions and improve tolerance to high-temperature stress in every group, as compared to the untreated group (Comparative Example 3). However, it was unexpectedly found that the effect of improving stress tolerance under high-temperature stress was higher in the hydrophobic fraction (Example 2) than in the hydrophilic fraction (Comparative Example 4).

### <Test Example 3 (Test for Confirming Growth-Promoting Effect in Rice Hydroponics)>

### Example 3

In Example 3, a liquid culture medium prepared by diluting OAT House Fertilizer (registered trademark) Formulation A, manufactured by OAT Agrio Co., Ltd., was placed in an erlenmeyer flask. Then, capsanthin or a paprika pigment was added to the liquid culture medium to give the concentrations shown in Table 3. The capsanthin concentration in the paprika pigment (manufactured by San-Ei Gen F. F. I., Inc.) was measured by high performance liquid chromatography at General Incorporated Association Japan Food Research Laboratories. As a result, about 221 mg of capsanthin was contained in 100 g of the paprika pigment. The measurement conditions were as follows.
Model: LC-20 (manufactured by Shimadzu Corporation)
Detector: UV-VIS absorption spectrometer SPD-20AV (manufactured by Shimadzu Corporation)
Column: Shim-pack CLC-SIL (M) (size: 4.6 mm × 150 mm) (manufactured by Shimadzu Corporation)
Column temperature: 30°C
Mobile phase: mixture of hexane and acetone (81:19)
Flow rate: 1.1 mL/min
Measurement wavelength: 474 nm
Injection volume: 30 µL

Next, paddy rice *(Koshihikari)* was grown to seedlings in culture soil, and then the roots of the rice were cut to a predetermined length. Five of the cut seedlings were inserted into each erlenmeyer flask containing the above-described liquid culture medium. Then, after cultivation at 25°C for 6 days, the length of the roots of the rice was measured, and the length of regenerated roots was calculated.

### Comparative Example 5

In Comparative Example 5, the same test as in Example 3 was repeated, except for using the liquid culture medium not containing the capsanthin or paprika pigment.

### Reference Example 3

In Reference Example 3, the same test as in Example 3 was repeated, except for using the liquid culture medium containing a commercially available material for improving high-temperature tolerance (material A) at the dilution factor shown in Table 3.

The dilution factor is shown for Reference Example 3, because the content of the active ingredient in the commercially available product is unknown.

The results are shown in Table 3. The results of Example 3 and Reference Example 3 are expressed as the ratio (%) with respect to the result of Comparative Example 5 (untreated group) taken as 100.

**[Table 3]**

| Table 3 | Name of Test Component /Test Agent | Concentration (ppm) /Dilution Factor | Capsanthin Concentration (ppm) | 25°C (Growth Promotion) |
|---|---|---|---|---|
| | | | | Ratio to Untreated Group (%) |
| Comp. Ex. 5 | Untreated | - | - | 100 |
| Ex. 3 | Capsanthin | 0.00000663 | 0.00000663 | 104 |
| | | 0.0000663 | 0.0000663 | 102 |
| | | 0.000221 | 0.000221 | 102 |
| | | 0.00221 | 0.00221 | 108 |
| | Paprika Pigment | 0.003 | 0.00000663 | 105 |
| | | 0.03 | 0.0000663 | 103 |
| | | 0.1 | 0.000221 | 102 |
| | | 1 | 0.00221 | 112 |
| Ref. Ex. 3 | Material for Improving High-Temperature Tolerance (Material A) | 100,000-fold | - | 106 |

### <Test Example 4 (Test of High-Temperature Stress Tolerance Improvement in Rice Hydroponics)>

### Example 4

In Example 4, a liquid culture medium prepared by diluting OAT House Fertilizer (registered trademark) Formulation A, manufactured by OAT Agrio Co., Ltd., was placed in an erlenmeyer flask. Then, the above-described capsanthin or paprika pigment was added to the liquid culture medium to give the concentrations shown in Table 4. Next, paddy rice *(Koshihikari)* was grown to seedlings in culture soil, and then the roots were cut to a predetermined length. Five of the seedlings were inserted into each erlenmeyer flask. Then, after cultivation at 35°C for 6 days, the length of the roots of the rice was measured, and the length of regenerated roots was calculated.

### Comparative Example 6

In Comparative Example 6, the same test as in Example 4 was repeated, except for using the liquid culture medium not containing the capsanthin or paprika pigment.

The results are shown in Table 4. The results of Example 4 are expressed as the ratio (%) with respect to the result of Comparative Example 6 (untreated group) taken as 100.

**[Table 4]**

| Table 4 | Name of Test Component /Test Agent | Concentration (ppm) /Dilution Factor | Capsanthin Concentration (ppm) | 35°C (High-Temperature Stress) |
|---|---|---|---|---|
| | | | | Ratio to Untreated Group (%) |
| Comp. Ex. 6 | Untreated | - | - | 100 |
| Ex. 4 | Capsanthin | 0.00000663 | 0.00000663 | 115 |
| | | 0.0000663 | 0.0000663 | 132 |
| | | 0.000221 | 0.000221 | 113 |
| | | 0.00221 | 0.00221 | 122 |
| | | 0.00663 | 0.00663 | 114 |
| | | 0.0221 | 0.0221 | 109 |
| | | 0.0663 | 0.0663 | 140 |
| | Paprika Pigment | 0.003 | 0.00000663 | 112 |
| | | 0.03 | 0.0000663 | 111 |
| | | 0.1 | 0.000221 | 117 |
| | | 1 | 0.00221 | 101 |
| | | 3 | 0.00663 | 106 |
| | | 10 | 0.0221 | 109 |
| | | 30 | 0.0663 | 115 |

### <Test Example 5 (Test of Salt Stress Tolerance Improvement in Rice Hydroponics)>

### Example 5

In Example 5, a liquid culture medium prepared by diluting OAT House Fertilizer (registered trademark) Formulation A, manufactured by OAT Agrio Co., Ltd., was placed in an erlenmeyer flask. Then, sodium chloride was added to the liquid culture medium to give a final concentration of 120 mM, and the capsanthin or paprika pigment was added to the liquid culture medium to give the concentrations shown in Table 3. Next, paddy rice *(Koshihikari)* was grown to seedlings in culture soil, and then the roots were cut to a predetermined length. Five of the seedlings were inserted into each erlenmeyer flask. Then, after cultivation for 6 days, the length of the roots of the rice was measured, and the length of regenerated roots was calculated.

### Comparative Example 7

In Comparative Example 7, the same test as in Example 5 was repeated, except for using the liquid culture medium not containing the capsanthin or paprika pigment.

### Reference Example 4

In Reference Example 4, the same test as in Example 5 was repeated, except for using the liquid culture medium containing a commercially available material for improving salt tolerance (material B) at the dilution factor shown in Table 5, instead of the capsanthin and paprika pigment.

The results are shown in Table 5. The results of Example 5 and Reference Example 4 are expressed as the ratio (%) with respect to the result of Comparative Example 7 (untreated group) taken as 100.

**[Table 5]**

| Table 5 | Name of Test Component /Test Agent | Concentration (ppm) /Dilution Factor | Capsanthin Concentration (ppm) | in the Presence of Sodium Chloride |
|---|---|---|---|---|
| | | | | Ratio to Untreated Group (%) |
| Comp. Ex. 7 | Untreated | - | - | 100 |
| | Capsanthin | 0.0000663 | 0.0000663 | 104 |
| | | 0.000221 | 0.000221 | 103 |
| | | 0.00221 | 0.00221 | 107 |
| | | 0.00663 | 0.00663 | 114 |
| | | 0.0221 | 0.0221 | 111 |
| Ex. 5 | | 0.0663 | 0.0663 | 126 |
| | Paprika Pigment | 0.03 | 0.0000663 | 106 |
| | | 0.1 | 0.000221 | 108 |
| | | 1 | 0.00221 | 105 |
| | | 3 | 0.00663 | 100 |
| | | 10 | 0.0221 | 112 |
| | | 30 | 0.0663 | 126 |
| Ref. Ex. 4 | Material for Improving Salt Tolerance (Material B) | 100,000-fold | - | 111 |

### <Results>

The results in Tables 3 to 5 showed that the capsanthin described in Examples 3 to 5 exhibited a comparable effect to that of the paprika pigment prepared from paprika containing the same concentrations of capsanthin and/or fatty acid esters thereof.

Since capsanthin is expensive (about 220,000 yen per mg), an inexpensive material containing capsanthin as a component is desired. In general, a paprika pigment contains capsanthin as a main component and is inexpensive; thus, the paprika pigment was further tested in the following tests.

### <Test Example 6 (Test for Confirming Growth-Promoting Effect in Rice Hydroponics)>

### Example 6

In Example 6, a liquid culture medium prepared by diluting OAT House Fertilizer (registered trademark) Formulation A, manufactured by OAT Agrio Co., Ltd., was placed in an erlenmeyer flask. Then, the paprika pigment was added to the liquid culture medium to give the concentrations shown in Table 6. Next, paddy rice *(Koshihikari)* was grown to seedlings in culture soil, and then the roots were cut to a predetermined length. Five of the seedlings were inserted into each erlenmeyer flask. Then, after cultivation at 25°C for 6 days, the length of the roots of the rice was measured, and the length of regenerated roots was calculated.

### Comparative Example 8

In Comparative Example 8, the same test as in the test of Example 6 using the paprika pigment was repeated, except for using the liquid culture medium not containing the paprika pigment or the like.

### Reference Example 5

In Reference Example 5, the same test as in the test of Example 6 using the paprika pigment was repeated, except for using the liquid culture medium containing a commercially available material for improving high-temperature tolerance (material A) at the dilution factor shown in Table 1, instead of the paprika pigment. The dilution factor is shown for Reference Example 5, because the content of the active ingredient in the commercially available product is unknown. For the same reason, the concentration is hereinafter shown in terms of dilution factor for reference examples.

The results are shown in Table 6. The results of Example 6 and Reference Example 5 are expressed as the ratio (%) with respect to the result of Comparative Example 8 (untreated group) taken as 100.

**[Table 6]**

| Table 6 | Name of Test Component /Test Agent | Concentration (ppm) /Dilution Factor | 25°C (Growth Promotion) |
|---|---|---|---|
| | | | Ratio to Untreated Group (%) |
| Comp. Ex. 8 | Untreated | - | 100 |
| Ex. 6 | Paprika Pigment | 0.03 | 102 |
| | | 0.1 | 112 |
| | | 1 | 112 |
| Ref. Ex. 5 | Material for Improving High-Temperature Tolerance (Material A) | 100,000-fold | 105 |

### <Results>

As can be seen from the results in Table 6, the treatment with the paprika pigment as in Example 6 was shown to promote the growth under a 25°C condition, which is assumed to be stress-free.

### <Test Example 7 (Test of High-Temperature Stress Tolerance Improvement in Rice Hydroponics)>

### Example 7

In Example 7, a liquid culture medium prepared by diluting OAT House Fertilizer (registered trademark) Formulation A, manufactured by OAT Agrio Co., Ltd., was placed in an erlenmeyer flask. Then, the paprika pigment was added to the liquid culture medium to give the concentrations shown in Table 7. Next, paddy rice *(Koshihikari)* was grown to seedlings in culture soil, and then the roots were cut to a predetermined length. Five of the seedlings were inserted into each erlenmeyer flask. Then, after cultivation at 35°C for 6 days, the length of the roots of the rice was measured, and the length of regenerated roots was calculated.

### Comparative Example 9

In Comparative Example 9, the same test as in the test of Example 7 using the paprika pigment was repeated, except for using the liquid culture medium not containing the paprika pigment or the like.

### Reference Example 6

In Reference Example 6, the same test as in the test of Example 7 using the paprika pigment was repeated, except for using the liquid culture medium containing a commercially available material for improving high-temperature tolerance (material A) at the dilution factor shown in Table 2, instead of the paprika pigment.

The results are shown in Table 7. The results of Example 7 and Reference Example 6 are expressed as the ratio (%) with respect to the result of Comparative Example 9 (untreated group) taken as 100.

**[Table 7]**

| Table 7 | Name of Test Component /Test Agent | Concentration (ppm) /Dilution Factor | 35°C (High-Temperature Stress) |
|---|---|---|---|
| | | | Ratio to Untreated Group (%) |
| Comp. Ex. 9 | Untreated | - | 100 |
| Ex. 7 | Paprika Pigment | 0.003 | 137 |
| | | 0.01 | 121 |
| | | 0.03 | 113 |
| | | 0.1 | 109 |
| | | 0.3 | 130 |
| | | 1 | 130 |
| | | 10 | 118 |
| Ref. Ex. 6 | Material for Improving High-Temperature Tolerance (Material A) | 100,000-fold | 121 |

### <Results>

As can be seen from Table 7, the treatment with the paprika pigment as in Example 7 was shown to promote root elongation under high-temperature conditions and improve tolerance to high-temperature stress.

### <Test Example 8 (Test of Salt Stress Tolerance Improvement in Rice Hydroponics)>

### Example 8

In Example 8, a liquid culture medium prepared by diluting OAT House Fertilizer (registered trademark) Formulation A, manufactured by OAT Agrio Co., Ltd., was placed in an erlenmeyer flask. Then, sodium chloride was added to the liquid culture medium to give a final concentration of 120 mM, and the paprika pigment was added to the liquid culture medium to give the concentrations shown in Table 8. Next, paddy rice *(Koshihikari)* was grown to seedlings in culture soil, and then the roots were cut to a predetermined length. Five of the seedlings were inserted into each erlenmeyer flask. Then, after cultivation for 6 days, the length of the roots of the rice was measured, and the length of regenerated roots was calculated.

### Comparative Example 10

In Comparative Example 10, the same test as in the test of Example 8 using the paprika pigment was repeated, except for using the liquid culture medium not containing the paprika pigment or the like.

### Reference Example 7

In Reference Example 7, the same test as in the test of Example 8 using the paprika pigment was repeated, except for using the liquid culture medium containing a commercially available material for improving salt tolerance (material B) at the dilution factor shown in Table 8, instead of the paprika pigment.

The results are shown in Table 8. The results of Example 8 and Reference Example 7 are expressed as the ratio (%) with respect to the result of Comparative Example 10 (untreated group) taken as 100.

**[Table 8]**

| Table 8 | Name of Test Component /Test Agent | Concentration (ppm) /Dilution Factor | in the Presence of Sodium Chloride |
|---|---|---|---|
| | | | Ratio to Untreated Group (%) |
| Comp. Ex. 10 | Untreated | - | 100 |
| Ex. 8 | Paprika Pigment | 0.003 | 113 |
| | | 0.01 | 111 |
| | | 0.03 | 103 |
| | | 0.1 | 105 |
| | | 0.3 | 103 |
| | | 1 | 109 |
| | | 3 | 111 |
| Ref. Ex. 7 | Material for Improving Salt Tolerance (Material B) | 100,000-fold | 130 |

### <Results>

As can be seen from Table 8, the treatment with the paprika pigment as in Example 8 was shown to promote root elongation under salt stress conditions and improve tolerance to salt stress.

### <Test Example 9 (Test of Dryness Stress Tolerance Improvement on Tomatoes)>

### Example 9

In Example 9, tomatoes (variety: Ponderosa) at the 5- to 6-leaf stage were immersed in an aqueous paprika pigment solution prepared to give the concentration shown in Table 9. Thereafter, after excess water was removed, water deprivation treatment was performed by completely withholding watering, and when the plants in the untreated group died, the plants were re-watered for recovery. The viability was calculated from the number of surviving tomato plants.

### Comparative Example 11

In Comparative Example 11, the same test as in the test of Example 9 using the paprika pigment was repeated, except for using water not containing the paprika pigment or the like.

### Reference Example 8

In Reference Example 8, the same test as in the test of Example 9 using the paprika pigment was repeated, except for using an aqueous solution containing a commercially available indigo pigment at the concentration shown in Table 9, instead of the paprika pigment.

The results are shown in Table 9 and FIG. 1. FIG. 1 shows photographs showing the state of tomato seedlings after the test (FIG. 1a and FIG. 1b). FIG. 1a shows a photograph of Comparative Example 11 (untreated) at the left and a photograph of Example 9 (paprika pigment) at the right. FIG. 1b shows a photograph of Comparative Example 11 (untreated) at the left and a photograph of Reference Example 8 (indigo pigment) at the right.

**[Table 9]**

| Table 9 | Name of Test Component /Test Agent | Concentration (%) | Viability (%) |
|---|---|---|---|
| Comp. Ex. 11 | Untreated | - | 16.7 |
| Ex. 9 | Paprika Pigment | 0.3 | 66.7 |
| Ref. Ex. 8 | Indigo Pigment | 0.05 | 16.7 |

### <Results>

As can be seen from Table 9 and FIG. 1, the treatment with the paprika pigment as in Example 9 was shown to increase the viability after the water deprivation and improve the tolerance to dryness stress.

### <Test Example 10 (Test of Dryness Stress Tolerance Improvement on Wheat)>

### Example 10

In Example 10, wheat (variety: Norin 61) was sown in a cultivation tank in a greenhouse, and cultivated to the ear-emergence stage by irrigating the plants with tap water using a drip irrigation system. Next, after the ear emergence of wheat, the irrigation was continued in a sufficiently irrigated group, whereas a dryness stress group was subjected to water deprivation for 7 days. Then, after the water deprivation and after re-watering, an aqueous paprika pigment solution prepared to give the concentration shown in Table 10 was applied by foliar application to each of the sufficiently irrigated group and the dryness stress group. Thereafter, the number of ears per plant was investigated 132 days after sowing for the sufficiently irrigated group and 137 days after sowing for the dryness stress group.

### Comparative Example 12

In Comparative Example 12, the same test as in the test of Example 10 using the paprika pigment was repeated, except for using water (containing 100 ppm of Tween (registered trademark; hereinafter abbreviated) 20) not containing the paprika pigment or the like.

### Reference Example 9

In Reference Example 9, the same test as in the test of Example 10 using the paprika pigment was repeated, except for using an aqueous solution containing a commercially available indigo pigment at the concentration shown in Table 10, instead of the paprika pigment.

The results are shown in Table 10. The results of Example 10 and Reference Example 9 are expressed as the ratio (%) with respect to the result of Comparative Example 12 (untreated group) taken as 100.

**[Table 10]**

| Table 10 | Name of Treatment Agent | Group | Concentration /Dilution Factor | Number of Ears per Plant | Ratio to Untreated Group (%) |
|---|---|---|---|---|---|
| Comp. Ex. 12 | Untreated | Sufficiently Irrigated Condition | - | 8.9 | 100 |
| Ex. 10 | Paprika Pigment | | 0.3 ppm | 10.6 | 119 |
| Ref. Ex. 9 | Indigo Pigment | | 0.3 ppm | 9.4 | 106 |
| Comp. Ex. 12 | Untreated | Dryness Stress Condition | - | 6.0 | 100 |
| Ex. 10 | Paprika Pigment | | 0.3 ppm | 9.4 | 157 |
| Ref. Ex. 9 | Indigo Pigment | | 0.3 ppm | 6.0 | 100 |

### <Results>

As can be understood from Table 10, the paprika pigment in Example 10 increased the number of ears, and further exhibited a growth-promoting effect and a dryness stress tolerance-improving effect, as compared to the water-treated group, under both the sufficiently irrigated condition and the dryness stress condition.

### <Test Example 11 (Test of Dryness Stress Tolerance Improvement on Wheat)>

### Example 11

In Example 11, wheat (variety: *Chikugoizumi*) was sown in 1/5000a Wagner pots and cultivated at a density of 2 plants/pot. Next, all pots were irrigated with the same amount of tap water until the ear-emergence stage of wheat, and irrigation with a chemical solution was started after the ear emergence. In this test, dryness stress was induced by reducing the amount of irrigation to about half of the normal amount. After yellow ripening of the wheat was confirmed, the aboveground portions of the wheat were harvested, and the weight of grains per plant was investigated. A 30 ppm aqueous solution of the paprika pigment was used as the chemical solution.

### Comparative Example 13

In Comparative Example 13, the same test as in the test of Example 11 using the paprika pigment was repeated, except for using water for irrigation after the ear emergence.

### Reference Examples 10 and 11

In Reference Example 10, the same test as in the test of Example 11 using the paprika pigment was repeated, except for using a commercially available material for improving salt tolerance (material B) at the dilution factor shown in Table 11. Additionally, in Reference Example 11, the same test as in the test of Example 11 using the paprika pigment was repeated, except for using potassium acetate at the concentration shown in Table 11.

The results are shown in Table 11. The results of Example 11, and Reference Examples 10 and 11 are expressed as the ratio (%) with respect to the result of Comparative Example 13 (untreated group) taken as 100.

**[Table 11]**

| Table 11 | Test Group /Concentration or Dilution Factor | Weight of Grains (g DW/Plant) | |
|---|---|---|---|
| | | Average | Ratio to Untreated Group (%) |
| Comp. Ex. 13 | Untreated | 7.3 | 100 |
| Ex. 11 | Paprika Pigment 30 ppm | 9.0 | 123 |
| Ref. Ex. 10 | Material for Improving Salt Tolerance (Material B) 3,000-fold | 7.7 | 105 |
| Ref. Ex. 11 | Potassium Acetate 0.1% | 9.3 | 126 |

### <Results>

As can be seen from Table 11, the paprika pigment of Example 11 was shown to increase the grain yield of wheat and improve the dryness stress tolerance, under the condition of cultivation with a significantly smaller amount of irrigation than normal. Therefore, in the present invention, the paprika pigment containing capsanthin had a grain yield-increasing effect under dryness stress.

### <Test Example 12 (Test of Pod Number Increase on Common Beans)>

### Example 12

In Example 12, common beans (variety: *Hatsumidori* 2) were grown to seedlings in a cell tray, and the seedlings were transplanted into a 15 cm polypot when first true leaves began to develop. Six plants of common beans were tested in a single test group. Then, after the flowering stage, an aqueous paprika pigment solution prepared at each concentration shown in Table 7 was sprayed with a sprayer at 5 mL/per plant twice in total. The plants were harvested when the primary leaves began to turn yellow and drop, and the pod number was investigated for pods having a pod length of 6 cm or more.

### Comparative Example 14

In Comparative Example 14, the same test as in the test of Example 12 using the paprika pigment was repeated, except for using water instead of the aqueous paprika pigment solution.

### Reference Example 12

In Reference Example 12 (as a positive control), the same test as in the test of Example 12 using the paprika pigment was repeated, except for using a commercially available seaweed extract material (material C) at the dilution factor shown in Table 12.

The evaluation results are shown in Table 12. The results of Example 12 and Reference Example 13 are expressed as the ratio (%) with respect to the result of Comparative Example 14 (untreated group) taken as 100.

**[Table 12]**

| Table 12 | Test Agent | Concentration (ppm) /Dilution Factor | Pod Number | |
|---|---|---|---|---|
| | | | Average | Ratio to Untreated Group (%) |
| Comp. Ex. 14 | Untreated | - | 8.7 | 100 |
| Ex. 12 | Paprika Pigment | 0.003 | 9.6 | 110 |
| | | 30 | 9.0 | 104 |
| Ref. Ex. 12 | Seaweed Extract Material (Material C) | 1,000-fold | 9.4 | 108 |

### <Results>

As can be seen from Table 12, the paprika pigment of Example 12 increased the pod number of common beans at 0.003 ppm and 30 ppm. Therefore, in the present invention, the paprika pigment containing capsanthin had a pod number-increasing effect under normal conditions.

### <Test Example 13 (Test of High-Temperature Stress Tolerance Improvement on Tomatoes)>

### Example 13

In Example 13, two plants of tomatoes (variety: Karen) were planted in each planter on June 3, 2022, and grown to the 14th cluster in a plastic greenhouse. One week after the planting, from the time of flowering of the first cluster, an aqueous paprika pigment solution adjusted to each concentration shown in Table 8 was periodically sprayed on the whole plants of tomatoes in an amount of 100 mL/plant, and the number of flowers and the number of fruit sets in each cluster were measured. During the cultivation period, irrigation and fertilization were performed as required with Tankmix (registered trademark) Formulation A&B, manufactured by OAT Agrio Co., Ltd.

### Comparative Example 15

In Comparative Example 15, the same test as in the test using the paprika pigment was repeated, except for using water instead of the aqueous paprika pigment solution.

Table 13 shows the results of the number of flowers and the number of fruit sets on the clusters at an average temperature of 30°C or more in the greenhouse. The average temperature in the greenhouse refers to an average temperature including night temperatures, and the environment at an average temperature of 30°C or more can be defined as a high-temperature condition in tomato cultivation. The results of Example 13 are expressed as the ratio (%) with respect to the results of Comparative Example 15 (untreated group) taken as 100.

**[Table 13]**

| Table 13 | Test Group/Concentration | 4th to 8th Clusters | | 3th to 6th Clusters | |
|---|---|---|---|---|---|
| | | Number of Flowers (/Plant) | Ratio to Untreated Group (%) | Number of Fruit Sets (/Plant) | Ratio to Untreated Group (%) |
| Comp. Ex. 15 | Untreated | 19.6 | 100 | 10.5 | 100 |
| Ex. 13 | Paprika Pigment 1 ppm | 20.5 | 105 | 11.4 | 108 |

### <Results>

As can be seen from Table 13, the paprika pigment of Example 13 increased the number of flowers and the number of fruit sets of tomatoes, on the clusters where flowering and fruit setting occurred under the high-temperature condition (at an average temperature of 30°C or more in the greenhouse), as compared to the untreated group of Comparative Example 15. Therefore, in the present invention, the paprika pigment containing capsanthin had an effect of increasing or promoting the number of flowers and an effect of increasing or promoting the number of fruit sets under high-temperature stress.

### <Test Example 14 (Test of High-Temperature Stress Tolerance Improvement on Strawberries)>

### Example 14

From September 1, 2023, a sufficient amount of an aqueous paprika pigment solution adjusted to a predetermined concentration was applied by foliar application on the whole plants of strawberry seedlings that had been cultivated outdoors since July 19. On October 19, flower bud speculum was performed to investigate the degree of flower bud differentiation. The microscopic examination of flower buds was performed at n=8 in each group, and the degree of flower bud differentiation was evaluated as 1: later apex enlargement stage, 2: flower cluster differentiation stage, 3: sepal formation stage, 4: petal formation stage, 5: stamen formation stage, and 6: pistil formation stage.

### Comparative Example 16

In Comparative Example 16 (untreated group), the same test as in the test of Example 14 using the paprika pigment was repeated, except for using water instead of the aqueous paprika pigment solution.

These evaluation results are shown in Table 14.

**[Table 14]**

| Table 14 | Name of Test Component | Concentration (ppm) | Average |
|---|---|---|---|
| | | | Flower Bud Differentiation Index |
| Comp. Ex. 16 | Untreated | - | 2.9 |
| Ex. 14 | Paprika Pigment | 10 | 3.3 |

### <Results>

As can be seen from Table 14, the paprika pigment of Example 14 promoted flower bud differentiation of the strawberry seedlings grown outdoors in summer under a high-temperature condition, as compared to the untreated group of Comparative Example 16. Therefore, in the present invention, the paprika pigment containing capsanthin had a flower bud differentiation-promoting effect under high-temperature stress.

### <Test Example 15 (Test of High-Temperature Stress Tolerance Improvement on Strawberries)>

### Examples 15 to 17

An aqueous paprika pigment solution adjusted to a predetermined concentration was applied by foliar application on the whole plants of strawberry seedlings that had been cultivated outdoors since July 19, 2023, at intervals of one week from September 1 until transplantation of the seedlings, and at intervals of two weeks after the seedlings were transplanted into pots. Six plants were used in each group, and the number of days from the transplantation to flowering of the first flower was counted. During the cultivation period, irrigation and fertilization were performed as required with a solution prepared by diluting OAT House Fertilizer (registered trademark) Formulation A, manufactured by OAT Agrio Co., Ltd.

### Comparative Examples 17 to 19

In Comparative Examples 17 to 19 (untreated groups), the same test as in the test using the paprika pigment was repeated, except for using water instead of the aqueous paprika pigment solution.

These evaluation results are shown in Table 15.

**[Table 15]**

| Table 15 | Name of Test Component | Concentration (ppm) | Variety (Timing of Start of Treatment) | Average |
|---|---|---|---|---|
| | | | | Number of Days to Flowering |
| Comp. Ex. 17 | Untreated | - | *Sachinoka* (Treated after Seedling Period) | 45.7 |
| Ex. 15 | Paprika Pigment | 10 | | 43.3 |
| Comp. Ex. 18 | Untreated | - | *Sachinoka* (Treated after Transplantation) | 45.7 |
| Ex. 16 | Paprika Pigment | 10 | | 44.3 |
| Comp. Ex. 19 | Untreated | - | *Yotsuboshi* (Treated after Transplantation) | 37.8 |
| Ex. 17 | Paprika Pigment | 10 | | 32.0 |

### <Results>

As can be seen from Table 15, the paprika pigment of Examples 15 to 17 accelerated flowering of the strawberries of each variety grown in a greenhouse in summer under a high-temperature condition, as compared to the untreated groups of Comparative Examples 17 to 19. Therefore, in the present invention, the paprika pigment containing capsanthin had a flowering-promoting effect under high-temperature stress.

### <Test Example 16 (Test of High-Temperature Stress Tolerance Improvement on Komatsuna)>

### Example 18

A 10 ppm solution of the paprika pigment was applied by foliar application to *komatsuna* at 4.5-leaf stage, and the plants were grown with a light period of 17 hours (07:00 to 24:00) and a dark period of 7 hours (00:00 to 07:00), under temperature conditions of 25°C from 00:00 to 05:00; 28°C from 05:00 to 06:00; 31°C from 06:00 to 07:00; 35°C from 07:00 to 16:00; 32°C from 16:00 to 17:00; 29°C from 17:00 to 18:00; and 25°C from 18:00 to 24:00. One week after the first treatment, the paprika pigment solution was applied to *komatsuna* a second time. Thereafter, the plants were grown for one week and then harvested and investigated. The temperature conditions during the growth were set based on the temperatures in a greenhouse in summer.

### Comparative Example 20

In Comparative Example 20 (untreated group), the same test as in the test using the paprika pigment was repeated, except for using water instead of the aqueous paprika pigment solution.

These evaluation results are shown in Table 16.

**[Table 16]**

| Table 16 | Name of Test Component | Concentration (ppm) | Fresh Weight of Aboveground Portions | |
|---|---|---|---|---|
| | | | Weight (g) | Ratio to Untreated Group (%) |
| Comp. Ex. 20 | Untreated | - | 20.4 | 100 |
| Ex. 18 | Paprika Pigment | 10 | 22.3 | 109 |

### <Results>

As can be seen from Table 16, the fresh weight of aboveground edible portions of *komatsuna* grown under a high-temperature condition increased by about 9% in the group treated with the paprika pigment in Example 18, as compared to Comparative Example 20 (untreated group). Therefore, in the present invention, the paprika pigment containing capsanthin had an effect of increasing the fresh weight of aboveground portions under high-temperature stress.

### <Test Example 17 (Analysis of High-Temperature Stress Marker Gene Expression Level)>

### Comparative Example 21

Analysis of expression levels of the high-temperature stress marker genes SIHSFA1a and SIHSFA3 was performed using an untreated group (water-sprayed group) grown under conditions without high-temperature stress (without elevated temperature), according to the measurement method described below.

### Examples 19 to 21

Analysis of expression levels of the high-temperature stress marker genes SIHSFA1a and SIHSFA3 was performed using, as examples, a paprika pigment-sprayed group grown under conditions without high-temperature stress (without elevated temperature), an untreated group (water-sprayed group) grown under conditions with high-temperature stress (with elevated temperature), and a paprika pigment-sprayed group grown under conditions with high-temperature stress (with elevated temperature), according to the measurement method described below.

In the relative expression level analysis in this example, the expression level for a water-sprayed group (Comparative Example 21) grown under conditions without high-temperature stress was taken as 1.0 and used as the reference.
- untreated group (water-sprayed group) without high-temperature stress (without elevated temperature) (Comparative Example 21)
- paprika pigment-sprayed group without high-temperature stress (without elevated temperature) (Example 19)
- untreated group (water-sprayed group) with high-temperature stress (with elevated temperature) (Example 20)
- paprika pigment-sprayed group with high-temperature stress (with elevated temperature) (Example 21)

### [Measurement Method]

### (Sample Preparation (Preparation of Plants of Micro-Tom))

Water or a 100 ppm solution of the paprika pigment was each applied by foliar application to Micro-Tom (scientific name: *Solanum Lycopersicum cv. Micro-Tom*) at the flowering stage grown in pots. Thereafter, the plants were grown under conditions without high-temperature stress (Comparative Example 21 and Example 19), i.e., in an environment with a light period of 16 hours at 25°C and a dark period of 8 hours at 22°C, or under conditions with high-temperature stress (Examples 20 and 21), i.e., in an environment with a light period of 16 hours at 36°C and a dark period of 8 hours at 22°C, and one hour after the foliar application treatment, leaf tissues of the plants were sampled. Immediately after the sampling, the leaf tissues of the plants were placed in liquid nitrogen and stored at -80°C until RNA extraction and subsequent operations.

### (RNA Extraction and cDNA Synthesis)

Extraction of total RNA and removal of genomic DNA from the leaf tissues of the plants were performed using RNAiso Plus (manufactured by Takara Bio Inc.). RNA was eluted using 30 µL of RNAse-free Water (manufactured by Takara Bio Inc.). A microvolume spectrophotometer (NANODROP (registered trademark), manufactured by Thermo Fisher Scientific Inc.) was used to derive the concentration of the RNA solution, which confirmed that the quality of the RNA sample was acceptable. Thereafter, ReverTra Ace (registered trademark) (manufactured by Toyobo Co., Ltd) was used to perform a reverse transcription reaction to synthesize cDNA.

### (RT-qPCR)

KAPA SYBR Fast qPCR kit (Universal qPCR kit) (manufactured by NIPPON Genetics Co., Ltd) was used as the enzyme for RT-qPCR, and 1 µL of the cDNA solution was added to 20 µL of the reaction solution. PCR was performed using a qRT-PCR system (Thermal Cycler Dice Real Time System III). After data acquisition, the expression levels of each gene were compared by the comparative CT method (ΔΔCT method). The expression levels of the ACT gene as a reference were used, and the expression levels of each gene were normalized to the values of the untreated group (water-sprayed group) not subjected to high-temperature stress.

**[Table 17]**

| Table 17 | Temperature Condition | Name of Test Component | Concentration (ppm) | SIHSFA1a Gene Expression Level | SIHSFA3 Gene Expression Level |
|---|---|---|---|---|---|
| Comp. Ex. 21 | without Elevated Temperature | Untreated | - | 1.00 | 1.00 |
| Ex. 19 | | Paprika Pigment | 100 | 1.20 | 1.56 |
| Ex. 20 | with Elevated Temperature | Untreated | - | 1.44 | 3.23 |
| Ex. 21 | | Paprika Pigment | 100 | 2.48 | 5.19 |

### <Results>

As can be seen from Table 17, the expression level of SIHSFA1a in the solution-sprayed group (without elevated temperature; paprika pigment) of Example 19 increased by 1.20-fold, as compared to the sprayed group (without elevated temperature; untreated (water)) of Comparative Example 21. Moreover, the expression level of SIHSFA1a in the solution-sprayed group (with elevated temperature; paprika pigment) of Example 21 was 2.48-fold higher than the expression level in the sprayed group (without elevated temperature; untreated (water)) of Comparative Example 21.

The expression level of SIHSFA3 in the solution-sprayed group (without elevated temperature; paprika pigment) of Example 19 increased by 1.56-fold, as compared to the sprayed group (without elevated temperature; untreated (water)) of Comparative Example 21. Moreover, the expression level of SIHSFA3 in the solution-sprayed group (with elevated temperature; paprika pigment) of Example 21 was 5.19-fold higher than the expression level in the sprayed group (without elevated temperature; untreated (water)) of Comparative Example 21.

These results confirmed that the treatment with the paprika pigment solution under conditions without high-temperature stress results in increased expression levels of the high-temperature marker genes. Additionally, the treatment with the paprika pigment solution under conditions with high-temperature stress was confirmed to result in further increased expression levels of the high-temperature marker genes.

### Example 22

On June 1, 2023, soil was tilled and fertilized using calcium superphosphate (manufactured by Asahi Agria Co., Ltd) at 100 kg/10a and a chemical fertilizer (manufactured by JA (Japan Agricultural Cooperatives); nitrogen content: 16%, phosphate content: 16%, and potash content: 16%) as nitrogen (N) at 15 kg/10a, and spinach seeds (variety: Justice) were sown at a spacing of 5 cm between plants, a spacing of 15 cm between rows, and a sowing depth of 1 cm. Twenty plants per row and eighty plants in a single test group were planted. During the growth period, the soil surface was examined, and the soil was irrigated as required.

Formulation Example 4 shown above was periodically sprayed on the whole plants. A yield investigation was performed on July 11, 2023.

### Comparative Example 22

As a comparative example, the same test as in the test using the solution containing the paprika pigment was repeated, except for using water instead of Example 22 (Formulation Example 4).

### Reference Example 13

As a reference example (positive control), the same test as in Example 22 (Formulation Example 4) was repeated, except for using a commercially available material for improving high-temperature tolerance (material A) at the dilution factor shown in the table.

The results are shown in Table 18 below. The results of Example 22 and Reference Example 13 are expressed as the ratio (%) with respect to the result of Comparative Example 22 (untreated) taken as 100.

**[Table 18]**

| Table 18 | Test Agent | Dilution Factor | Yield (kg) | Ratio to Untreated Group (%) |
|---|---|---|---|---|
| Comp. Ex. 22 | Untreated | - | 9.6 | 100 |
| Ex. 22 | Formulation Example 4 | 1000-fold | 11.6 | 120 |
| Ref. Ex. 13 | Material for Improving High-Temperature Tolerance (Material A) | 100-fold | 11.5 | 120 |

### <Results>

As can be seen from Table 18, the spraying of the paprika pigment formulation of Example 22 increased the yield of the fresh weight of edible portions of spinach by 20%, as compared to Comparative Example 22 (untreated), in summer under a high-temperature condition.

## Claims

1. An agent for improving environmental stress tolerance, comprising capsanthin and/or a fatty acid ester thereof, and intended for a plant.

2. The agent for improving environmental stress tolerance according to claim 1, wherein the capsanthin and/or fatty acid ester thereof is derived from a plant of the genus *Capsicum* in the family *Solanaceae.*

3. The agent for improving environmental stress tolerance according to claim 1, wherein the capsanthin and/or fatty acid ester thereof is an extract extracted from at least one plant selected from the group consisting of red paprika, red chili pepper, and red bell pepper, and
wherein the extract is hydrophobic.

4. The agent for improving environmental stress tolerance according to claim 1, wherein the environmental stress tolerance is high-temperature stress tolerance.

5. The agent for improving environmental stress tolerance according to claim 1, wherein the environmental stress tolerance is dryness stress tolerance.

6. The agent for improving environmental stress tolerance according to claim 1, wherein the environmental stress tolerance is salt stress tolerance.

7. The agent for improving environmental stress tolerance according to any one of claims 1 to 6, wherein the agent activates a stress responsive gene.

8. A composition for improving environmental stress tolerance, comprising the agent for improving environmental stress tolerance according to claim 1, the composition further comprising a fertilizer component and/or an additive.

9. A method for improving environmental stress tolerance of a plant, the method comprising using the agent for improving environmental stress tolerance according to claim 1 or the composition for improving environmental stress tolerance according to claim 8, for a plant or for a soil or a culture solution in which the plant is grown.

10. Use of capsanthin and/or a fatty acid ester thereof for improving environmental stress tolerance in a plant.
